# EUROPÄISCHE PATENTANMELDUNG

(11) **EP 2 071 485 A1**
(43) Veröffentlichungstag der Anmeldung: **17.06.2009**
(21) Anmeldenummer: 07024178.1
(22) Anmeldetag: 13.12.2007
(51) Int. Cl.: G06F 21/20

(54) **Verfahren und Vorrichtung zum Schutz eines elektronisch gespeicherten Inhalts vor automatisiertem Zugriff**

(71) Anmelder: x-Desktop Ltd., 70176 Stuttgart (DE)
(72) Erfinder: Schulze, Tobias, 70176 Stuttgart (DE)
(74) Vertreter: Wörz, Volker Alfred

(57) **Zusammenfassung**

Um einen durch einen Client (2) angeforderten elektronisch gespeicherten Inhalt vor automatisiertem zugriff zu schützen wird vorgeschlagen, dass der Client (2) zur Darstellung eines Informationsobjekts veranlasst wird, wobei das Informationsobjekt mindestens eine zeitlich veränderbare Information umfasst und die zeitlich veränderbare Information visuell unterscheidbare Zustände annimmt. Das Informationsobjekt ist beispielsweise eine animierte Graphik die mindestens ein Graphikelement enthält, das sich beispielsweise innerhalb einer vorgegebenen Fläche bewegt.

## Beschreibung

Die Erfindung betrifft ein Verfahren zum Schutz eines elektronisch gespeicherten Inhalts vor automatisiertem Zugriff, bei dem der Inhalt durch einen Client angefordert wird und der Client zur Darstellung eines Informationsobjekts veranlasst wird.

Die Erfindung betrifft auch ein Client-Server-System zum Schutz eines durch einen Client anforderbaren elektronisch gespeicherten Inhalts vor automatisiertem Zugriff, wobei der Client Mittel zur Anforderung des Inhalts aufweist, das Client-Server-System einen Server umfasst und der Server Mittel aufweist, um den Client zur Darstellung mindestens eines Informationsobjekts zu veranlassen.

Die Erfindung betrifft ferner ein Computerprogramm, das auf einem Client-Server-System ablauffähig ist.

Heutzutage werden eine Vielzahl unterschiedlichster Inhalte elektronisch abgespeichert. Derartige Inhalte beschreiben beispielsweise Text-, Bild- und Audioinformationen, die über ein Kommunikationsnetzwerk von einem sogenannten Client angefordert werden können. Die Inhalte sind in unterschiedlichsten Datenformaten abgespeichert und können von einer Vielzahl von Clients abgefragt werden.

Um Inhalte nur einem beschränkten Kreis von Nutzern beziehungsweise Clients zugänglich zu machen, ist es bekannt, die Inhalte mit einem sogenannten Password zu versehen, so dass ein Zugriff auf einen derartig geschützten Inhalt nur nach Eingabe des korrekten Passwords möglich ist. Ein Password zeichnet sich dadurch aus, dass es nur einem bestimmten Benutzerkreis bekannt ist.

Häufig sollen Inhalte jedoch einer vorher nicht bestimmbaren Menge von Benutzern zugänglich gemacht werden. Derartige Inhalte betreffen, beispielsweise Informationsseiten von Unternehmen oder öffentlichen Einrichtungen oder aktuelle Informationen wie beispielsweise Börsenkurse, die in kurzen Zeitabständen aktualisiert werden. Bei derartigen Informationen ist es meist unerwünscht, dass diese Informationen automatisiert abgefragt werden, was ein Vielzahl von Abfragen eines einzigen Clients ermöglichen würde und den Server überlasten würde. Bei derartigen Informationen soll also sichergestellt werden, dass dies stets individuell von einem Benutzer beziehungsweise Client angefordert werden, und es soll verhindert werden, dass diese Informationen in großen Mengen automatisiert gesammelt werden.

Insbesondere wenn die Informationsseiten persönliche Informationen wie e-Mailadressen, Telefonnummern oder postalische Adressen beinhalten, wird häufig versucht, diese Informationen automatisiert anzufordern, auszuwerten und zu sammeln. Beispielsweise werden e-Mailadressen, die auf Internetseiten angezeigt werden durch automatisierte Suchmaschinen, sogenannte "Webcrawler", die auch als "Spider" oder "Robot" bezeichnet werden, automatisch ausgelesen und gesammelt. Derartige auch als "Harvester" bezeichnete automatisierte Suchmaschinen suchen beispielsweise das world-wide-web automatisch nach e-Mailadressen ab und sammeln die gefundenen e-Mailadressen. Diese können dann an Unternehmen verkauft werden, die wiederum unerwünschte Werbeemails, sogenannte "Spam", an die e-Mailadressaten senden. Derartige Werbemails tragen einen signifikanten Teil zu der Belastung von Kommunikationsnetzwerken dar.

Es ist bekannt, einen elektronisch abgespeicherten Inhalt dadurch zu schützen, dass einem Client, der die Inhalte anfordert, zunächst ein Informationsobjekt übermittelt wird, das beispielsweise eine graphisch verfremdete Zeichenfolge enthält. Ein Benutzer des Clients muss diese graphische Zeichenfolge erkennen und beispielsweise mittels einer Tastatur in ein dafür vorgesehenes Textfeld eingeben. Der Benutzer veranlasst daraufhin - beispielsweise durch einen sogenannten Mausklick oder das Betätigen einer Eingabetaste - den Client, die eingegebene Zeichenfolge an den Server zu übermitteln. Der Server überprüft die so erhaltene Zeichenfolge daraufhin, ob diese mit der graphisch verfremdeten Zeichenfolge übereinstimmt. Nur wenn dies der Fall ist, wenn die verfremdete Zeichenfolge also richtig erkannt worden ist, wird der elektronisch gespeicherte Inhalt an den Client übermittelt.

Dieses bekannte Verfahren beruht darauf, dass eine graphisch verfremdete Zeichenfolge von einem menschlichen Benutzer einfacher erkannt werden kann als von einem automatisierten System. Zunehmend werden jedoch die automatisierten Verfahren zum Erkennen von Zeichenfolgen verbessert. Insbesondere durch die Fortschritte in der sogenannten Mustererkennung bieten die bekannten Verfahren keinen ausreichenden Schutz mehr vor automatisiertem Zugriff.

Es ist deshalb Aufgabe der vorliegenden Erfindung ein Verfahren und ein System zur Verfügung zu stellen, die einen verbesserten Schutz von elektronisch gespeicherten Inhalten vor automatisiertem Zugriff bieten.

Die Aufgabe wird durch ein Verfahren der eingangs genannten Art dadurch gelöst, dass das Informationsobjekt mindestens eine zeitlich veränderbare Information umfasst, wobei die zeitlich veränderbare Information visuell unterscheidbare Zustände annimmt. Das Informationsobjekt ist beispielsweise eine animierte Graphik die mindestens ein Graphikelement enthält, das sich beispielsweise innerhalb einer vorgegebenen Fläche bewegt.

Bei dem erfindungsgemäßen Verfahren wird ferner der Client zur Ausgabe mindestens einer Anweisung veranlasst, wobei die Anweisung mindestens einen Aktivierungszustand beschreibt und der Aktivierungszustand mindestens einen der visuell unterscheidbaren Zustände der veränderbaren Information entspricht. Die Anweisung kann beispielsweise mittels eines Textes dargestellt werden. Der Text beschreibt einen Aktivierungszustand, also beispielsweise eine bestimmte Position des sich bewegenden graphischen Elements.

Der Client veranlasst nun die Übermittlung einer Aktivierungsinformation an einen Server, wobei die Aktivierungsinformation eine Beschreibung des aktuellen Zustands der zeitlich veränderbaren Information umfasst. Die Aktivierungsinformation beschreibt beispielsweise eine aktuelle Position des sich in dem vorgegebenen Bereich bewegenden graphischen Elements.

Die Übermittlung kann hierbei durch Betätigen einer Taste an einer dem Client zugeordneten Tastatur erfolgen und bewirkt, dass die Aktivierungsinformation an den Server über ein Kommunikationsnetzwerk, das beispielsweise als das Internet ausgebildet ist, übermittelt wird.

Der Server empfängt die Aktivierungsinformation und wertet den mittels der Aktivierungsinformation erhaltenen aktuellen Zustand aus. Der Server prüft in Abhängigkeit von der Auswertung des aktuellen Zustands, ob die Übermittlung der Aktivierungsinformation veranlasst worden ist, während sich die zeitlich veränderbare Information, also beispielsweise das sich bewegende graphische Element, in der durch den Aktivierungszustand beschriebenen bestimmten Position befand. Eine Kodierung des aktuellen Zustands kann hierzu beispielsweise dadurch erfolgen, dass relative oder absolute Koordinaten der sich zeitlich veränderlichen Information mittels der Aktivierungsinformation an den Server übermittelt werden. Der Server kann dann prüfen, ob diese Koordinaten innerhalb eines den Aktivierungszustand beschreibenden Bereichs liegt. Nur wenn dies der Fall ist, ermöglicht der Server den Zugriff auf den elektronisch gespeicherten Inhalt. Der Zugriff dann dadurch erfolgen, dass der Server über Übermittlung des Inhalts and den Client selbst veranlasst. Es ist auch denkbar, dass der Server zunächst veranlasst, dass ein dynamisch erzeugter Link an den Client übermittelt wird und der Inhalt erst durch Aktivieren des Links von dem Server oder einem anderen Server angefordert und von diesem dann an den Client übermittelt wird.

Das erfindungsgemäße Verfahren erschwert damit den automatisierten Zugriff auf Inhalte, da zunächst die Anweisung syntaktisch und semantisch erfasst werden muss. Ferner muss der durch die Anweisung möglicherweise abstrakt beschriebene Aktivierungszustand erkannt werden und es muss, wenn der Aktivierungszustand erreicht ist, eine Aktion, beispielsweise das Betätigen einer Taste an der Tastatur oder das Klicken mit einer Computermaus in einen bestimmten Bereich durchgeführt werden, um die Übermittlung der Aktivierungsinformation an den Server zu veranlassen. Ein automatisierter Zugriff könnte zwar möglicherweise automatisiert die Übermittlung einer Aktivierungsinformation veranlassen, jedoch wird ein Zugriff auf den Inhalt nur dann ermöglicht, wenn die Aktivierungsinformation den Aktivierungszustand beschreibt. Dieser wiederum ist mittels eines automatisierten Verfahrens jedoch nicht zu erkennen, da zum Einen die Anweisung inhaltlich "verstanden" werden muss und zusätzlich erkannt werden muss, wann der durch die Anweisung beschriebene Aktivierungszustand bei dem Informationsobjekt, insbesondere bei der sich zeitlich verändernden Information, erreicht ist.

Vorteilhafterweise ist die zeitlich veränderbare Information realisiert durch ein sich innerhalb des Darstellungsbereichs bewegendes Element. Der Aktivierungszustand kann hier beispielsweise erreicht werden, wenn sich das sich bewegende Element in einer bestimmten Position befindet. Insbesondere kann vorgesehen sein, dass ein Aktivierungszustand dann erreicht ist, wenn sich das sich bewegende Element in einer bestimmten Position zu einem anderen - möglicherweise auch bewegenden - Element befindet.

Ferner ist es vorteilhaft, wenn die zeitlich veränderbare Information mittels eines unterschiedliche Farben annehmenden Elements realisiert ist. Ein Aktivierungszustand kann dann erreicht werden, wenn das Element eine in der Anweisung beschriebene Farbe angenommen hat. Weiter kann vorteilhaft sein, wenn die zeitlich veränderbare Information durch ein seine Größe oder Form veränderndes Element realisiert ist. Die zeitlich veränderbare Information kann auch durch eine unterschiedliche Werte annehmende Ziffer realisiert sein. Die Anweisung kann dann beschreiben, dass der Aktivierungszustand erreicht ist, wenn die Ziffer einen bestimmten Wert anzeigt.

Insbesondere kann die zeitlich veränderbare Information bezüglich mehrerer Eigenschaften veränderlich sein. Beispielsweise kann sich ein Element innerhalb eines vorgegebenen Bereichs bewegen und unterschiedliche Farben annehmen. Verändert das Element seine Größe und seine Farbe, so kann die Anweisung den Aktivierungszustand dahingehend beschreiben, dass dieser erreicht ist, wenn das Element größer als ein ebenfalls dargestelltes Element ist und eine bestimmte Farbe angenommen hat. Hier sind eine Vielzahl von Kombinationen denkbar, die ein automatisiertes Erkennen nochmals erschweren.

Besonders vorteilhaft ist, wenn die Anweisung selbst mittels eines Texts dargestellt ist, dieser jedoch verfremdet dargestellt wird, so dass eine automatisierte Lesbarkeit erschwert ist. Außerdem ist es vorteilhaft, wenn die Anweisung mittels eines graphischen Elements dargestellt ist, beispielsweise in einem Bilddatenformat, da dies die automatisierte Lesbarkeit weiter erschwert. Die Anweisung kann insbesondere auch ein graphisch darstellbares Element enthalten, das dem sich zeitlich veränderbaren Element entspricht, so dass dieses nicht explizit in Worten beschrieben werden muss. Ist das zeitliche Element beispielsweise eine sich in dem Darstellungsbereich bewegende Kugel, so kann statt des Wortes "Kugel" in der Anweisung selbst eine Kugel abgebildet sein.

Ferner ist es vorteilhaft, wenn die Anweisung vor einer Hintergrundgraphik dargestellt wird, so dass die Hintergrundgraphik eine automatisierte Lesbarkeit nochmals erschwert.

Gemäß einer anderen bevorzugten Ausführungsform des erfindungsgemäßen Verfahrens wird zumindest ein Teil der Anweisung akustisch ausgegeben, was die automatisierte Erkennbarkeit des Inhalts der Anweisung weiter erschwert.

Vorzugsweise umfasst das Informationsobjekt mindestens eine weitere Information. Der Aktivierungszustand wird hierbei durch eine sich verändernde Beziehung zwischen dem sich verändernden Informationsobjekt und dem weiteren Informationsobjekt beschrieben.

Der aktuelle Zustand, der mittels der Aktivierungsinformation an den Server übermittelt wird, beschreibt beispielsweise eine aktuelle Position, eine aktuelle Farbe, eine aktuelle Größe oder eine aktuelle Form zumindest des sich bewegenden Informationselements. Besonders vorteilhaft ist es, wenn der aktuelle Zustand durch eine absolute oder relative Zeitangabe beschrieben wird. Diese Zeitangabe kann beispielsweise die seit dem Start der Animation vergangene Zeitspanne beschreiben. Der Server kann dann bei einer fest vorgegebenen - also nicht vom Zufall beeinflussten - Animation erkennen, ob der aktuelle Zustand dem Aktivierungszustand entspricht.

Vorzugsweise wird die Übermittlung der Aktivierungsinformation an den Server durch einmalige Betätigung einer Eingabevorrichtung, also beispielsweise einer Betätigung einer Taste an einer Tastatur oder eines Mausklicks veranlasst. Ferner kann vorgesehen sein, dass zunächst ein mittels eines Zeigegeräts, beispielsweise einer Computermaus, in eine bestimmte Position, beispielsweise relativ zu dem dargestellten Bildschirm, gebracht werden muss. Die Eingabevorrichtung kann auch als Touch-Screen ausgebildet sein, so dass durch Berühren des Touch-Screens, vorzugsweise in einem hierfür besonders gekennzeichneten Bereich, die Übermittlung der Aktivierungsinformation an den Server veranlasst werden kann. Es kann auch vorgesehen sein, dass die Übermittlung der Aktivierungsinformation durch ein Sprachsignal veranlasst wird, das von einem Benutzer abgegeben wird.

Vorteilhafterweise wird ein verändertes Informationsobjekt bei dem Client dargestellt, falls eine nicht der Aktivierungsinformation entsprechende Information von dem Server empfangen wird. Das veränderte Informationsobjekt kann beispielsweise ein anderes sich bewegendes Informationselement enthalten. Ferner kann eine Veränderung bezüglich einer anderen Eigenschaft vorgesehen sein. Damit wird erreicht, dass ein automatisierter Zugriff auch dann nicht möglich ist, wenn dieser wiederkehrend Aktivierungsinformationen an den Server übermittelt und davon ausgeht, durch die hohe Zahl der Aktivierungsinformationen irgendwann durch Zufall eine dem Aktivierungszustand entsprechende Aktivierungsinformation an den Server zu übermitteln.

Gemäß einer weiteren vorteilhaften Ausbildung des erfindungsgemäßen Verfahrens wird nach einer vorgegebenen Anzahl von Versuchen eines Zugriffs auf den Inhalt durch einen Client - zumindest bis zu dem Eintritt eines vorgebbaren Ereignisses - ein Zugriff nicht mehr ermöglicht. Dadurch wird nochmals ein automatisierter Zugriff erschwert, da auch ein sich ständig wiederholender Zugriffsversuch keinen Erfolg haben kann.

Die Aufgabe wird auch durch ein Client-Server-System der eingangs genannten Art dadurch gelöst, dass das Client-Server-System Mittel zur Durchführung der erfindungsgemäßen Aufgabe aufweist.

Die Aufgabe wird auch durch ein Computerprogramm der eingangs genannten Art gelöst, wenn das Computerprogramm auf einem Client-Server-System abläuft. Hierbei ist das Computerprogramm zur Durchführung des erfindungsgemäßen Verfahrens programmiert. Damit wird die Erfindung durch das Computerprogramm genauso realisiert, wie durch das erfindungsgemäße Verfahren, das durch das Computerprogramm ausgeführt wird, wenn das Computerprogramm auf dem Client-Server-System abläuft. Vorzugsweise ist das Computerprogramm auf einem Speichermedium, beispielsweise einem magnetischen oder optischen Speicherelement, abgespeichert.

Weitere Ausführungsformen der Erfindung sind in den folgenden Zeichnungen dargestellt. Es zeigen:
- Figur 1a: eine schematische Darstellung eines Client-Server-Systems gemäß einer ersten Ausführungsform;
- Figur 1b: eine schematische Darstellung eines Client-Server-Systems gemäß einer zweiten Ausführungsform;
- Figur 2: ein schematisiertes Ablaufdiagramm einer Ausführungsform des erfindungsgemäßen Verfahrens;
- Figuren 3a, 4a, 5a, 6a: Ausführungsformen von Informationsobjekten und Anweisungen in einem beliebigen Zustand;
- Figuren 3b, 4b, 5b, 6b: Ausführungsformen von Informationsobjekten und Anweisungen in dem Aktivierungszustand.

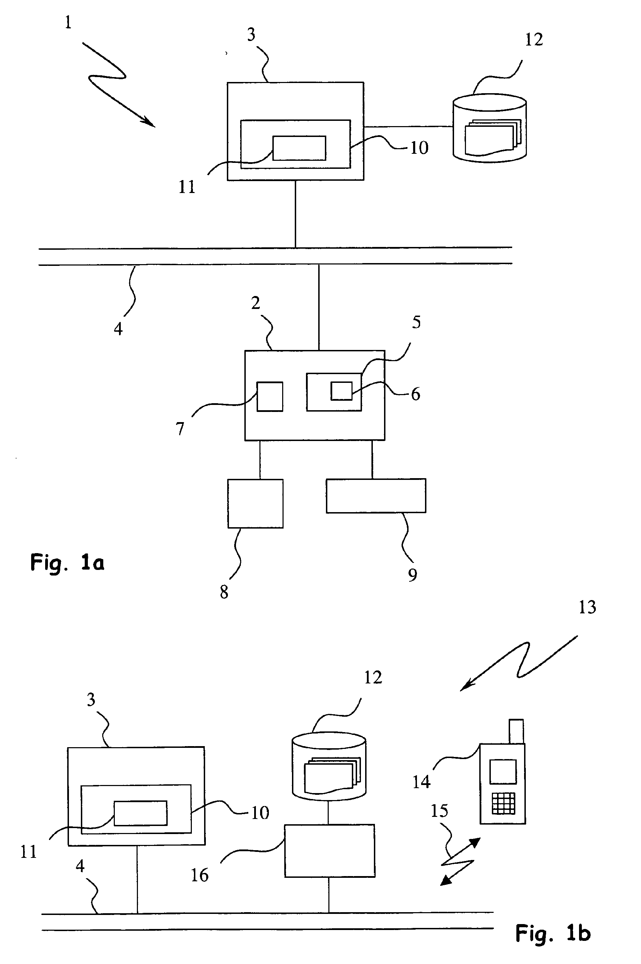

In Figur 1a ist ein Client-Server-System 1 dargestellt, das ein Client 2 und einen Server 3 umfasst, die über ein Kommunikationsnetzwerk 4, beispielsweise das Internet, verbunden sind. Der Client 2 weist ein Speicherelement 5 auf, in dem ein Computerprogramm 6 abgespeichert ist. Auf dem Client 2 läuft ferner ein sogenannter Browser 7, der in bekannter Weise eine Kommunikation mit dem Server 3 ermöglicht. Dem Client 2 sind ferner ein Monitor 8 und eine Eingabevorrichtung 9, beispielsweise eine Tastatur und/oder eine Computermaus zugeordnet. Der Monitor 8 kann beispielsweise auch als Touch-Screen realisiert sein, so dass die Eingabevorrichtung 9 für die Durchführung des erfindungsgemäßen Verfahrens nicht benötigt wird, falls eine Übermittlung der Aktivierungsinformation durch Berühren des Touch-Screens veranlasst werden kann.

Der Server 3 weist ein Speicherelement 10 auf, in dem ein Computerprogramm 11 abgespeichert ist. Dem Server 3 ist ferner ein Speicher 12 zugeordnet, in dem anforderbare Inhalte abgespeichert sind. Der Speicher 12 kann insbesondere als Datenbank ausgebildet sein.

In Figur 1b ist in einer weiteren Ausführungsform ein Client-Server-System 13 dargestellt, das einen als Mobiltelefon ausgebildeten Client 14 umfasst, der über eine Mobilfunkverbindung 15 mit dem Kommunikationsnetzwerk 4 und damit mit dem Server 3 verbunden ist. Das in Figur 1b dargestellte Client-Server-System 13 umfasst ferner einen Datenbankserver 16, dem der Speicher 12 mit Inhalten zugeordnet ist.

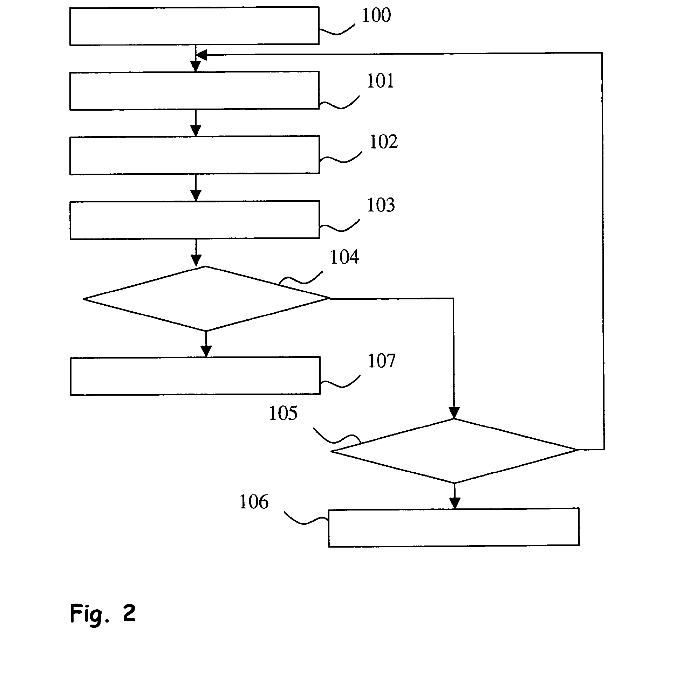

Die Funktionsweise der in den Figuren 1a und 1b dargestellten Client-Server-Systeme 1, 13 wird anhand des in Figur 2 dargestellten Ausführungsbeispiels des erfindungsgemäßen Verfahrens erläutert.

Das Verfahren beginnt in einem Schritt 100, in dem von dem Client 2, 14 eine Anforderung eines elektronisch abgespeicherten Inhalts über das Kommunikationsnetzwerk 4 an den Server 3 übermittelt wird. Insbesondere kann die Anforderung von Inhalten auch an den Datenbankserver 16 gerichtet sein.

Der Server 3 oder der Datenbankserver 16 veranlassen daraufhin den Client 2, 14 in einem Schritt 101 ein Informationsobjekt und eine Anweisung darzustellen. Hierzu kann vorgesehen sein, dass ein beispielsweise als sogenanntes Script oder Applet realisiertes Computerprogramm von dem Server 3 oder dem Datenbankserver 16 an den Client 2, 14 übermittelt wird und dort beispielsweise mittels des Browsers 7 interpretiert wird, was wiederum eine Darstellung des Informationsobjekts, beispielsweise auf dem Monitor 8 bewirkt.

Es kann auch vorgesehen sein, dass der Server 3 oder der Datenbankserver 16 den Client 2, 14 veranlasst, ein bereits bei dem Client 2, 14 abgespeichertes Computerprogramm zu starten, was dann eine Darstellung eines Informationsobjekts und einer Anweisung zur Folge hat. Hierbei kann das bereits auf dem Client 2, 14 abgespeicherte Computerprogramm beispielsweise eine Mehrzahl von Informationsobjekten und Anweisungen umfassen, die per Zufall ausgewählt werden. Insbesondere ist es vorstellbar, dass von dem Server 3 oder dem Datenbankserver 16 vorgegeben wird, welches Informationsobjekt und/welche Anweisung dargestellt werden sollen.

In einem Schritt 102 wird das Darstellungsobjekt und die Anweisung dargestellt. Eine Darstellung der Anweisung kann insbesondere auch eine akustische Wiedergabe der Anweisung umfassen. Das von dem Informationsobjekt umfasste sich zeitlich veränderte Element wird in der zeitlichen Veränderung dargestellt. Dies bedeutet, dass sich der Zustand mindestens eine Element in visuell wahrnehmbarer Form verändert. Eine Möglichkeit der Darstellung von zeitlich veränderbaren Zuständen kann durch ein Element erreicht werden, das sich in einem vorgegebenen Darstellungsbereich bewegt, seine Größe verändert, seine Farbe verändert und/oder seine Form verändert. Die Anweisung beschreibt akustisch, textuell oder graphisch, wann eine Aktion durchzuführen ist, so dass ein Zugriff auf die Inhalte möglich ist. Die Anweisung kann insbesondere auch verfremdet dargestellt werden, so dass eine maschinelle Erfassbarkeit nochmals erschwert ist. Die Anweisung beschreibt beispielsweise eine bestimmte Taste an dem Eingabegerät 9, die betätigt werden muss, wenn sich das sich bewegende Objekt genau im Zentrum eines anderen dargestellten graphischen Elements befindet.

In einem Schritt 103 wird dann die Übermittlung einer Aktivierungsinformation von dem Client 2, 14 an den Server 3 veranlasst. Die Aktivierungsinformation umfasst mindestens eine Eigenschaft des aktuellen Zustands des Informationsobjekts. Beispielsweise wird eine aktuelle Position des sich bewegenden graphischen Elements beschrieben.

In einem Schritt 104 wird die Aktivierungsinformation von dem Server 3 empfangen und es wird geprüft, ob der dort beschriebene aktuelle Zustand dem erwarteten Aktivierungszustand entspricht. Der Aktivierungszustand kann beispielsweise vorsehen, dass das sich bewegende Element sich in einer bestimmten Position befindet oder eine bestimmte Farbe aufweist. Wird in dem Schritt 104 eine Übereinstimmung ermittelt, so wird in einem Schritt 107 ein Zugriff auf die angeforderten Inhalte freigegeben. Hierzu werden beispielsweise die angeforderten Inhalte von dem Speicherelement 12 ausgelesen und an den Client 2, 14 übermittelt. Ferner kann der Server 3 veranlassen, dass der Datenbankserver 16 die angeforderte Information aus der Datenbank an den Client 2, 14 übermittelt.

Wurde jedoch keine Übereinstimmung in dem Schritt 104 festgestellt, wird in einem Schritt 105 geprüft, ob eine zulässige Anzahl von Aktivierungsversuchen durch den Client 2, 14 überschritten ist. Ist dies der Fall, so wird zu einem Schritt 106 verzweigt, in dem ein Zugriff auf die angeforderten Inhalte zumindest vorübergehend nicht gewährt wird.

War in dem Schritt 105 die zulässige Anzahl von Versuchen noch nicht überschritten, so kann vorgesehen sein, dass zu dem Schritt 101 verzweigt und die Darstellung eines veränderten Darstellungsobjekts und/oder einer veränderten Anweisung veranlasst wird.

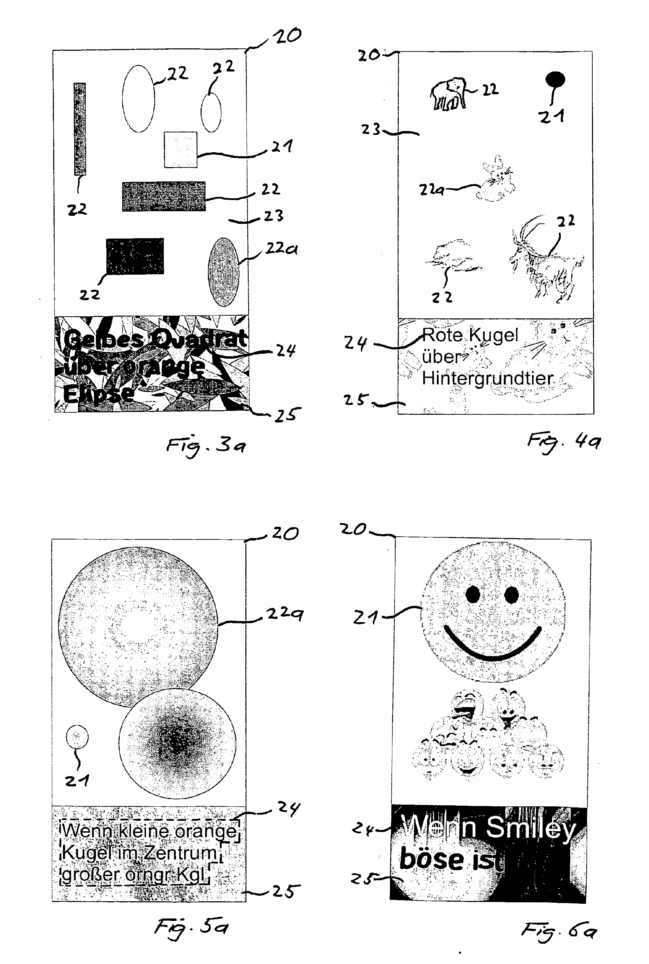

In den Figuren 3a, 4a, 5a und 6a ist jeweils ein Informationsobjekt 20 exemplarisch dargestellt, das eine zeitlich veränderbare Information 21 und weitere Informationen 22, 22a umfasst. Sowohl die zeitlich veränderbare Information 21 als auch die weiteren Informationen 22, 22a sind als graphische Elemente dargestellt. Hierbei bieten sich eine Vielzahl von unterschiedlichen Möglichkeiten an, wie dies mittels der Figuren 3a, 4a, 5a, und 6a exemplarisch gezeigt ist. Selbstverständlich können auch einzelne oder mehrere der weiteren Informationen 22, 22a als zeitlich veränderbare Informationen ausgebildet sein.

Die zeitlich veränderbare Information 21 und die weiteren Informationen 22, 22a sind in einem Darstellungsbereich 23 angeordnet. In den Figuren 3a, 4a, 5a, und 6a ist ferner in einem Anweisungsbereich 25 eine Anweisung 24 dargestellt.

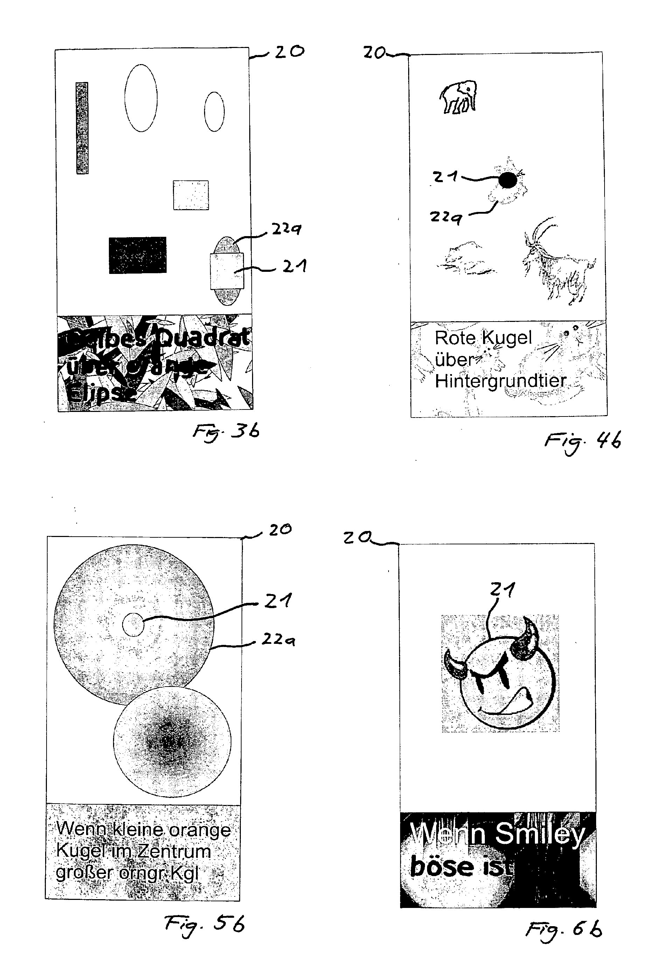

In den Figuren 3b, 4b, 5b, und 6b sind die zu den Figuren 3a, 4a, 5a, und 6a zugehörigen Aktivierungszustände dargestellt.

In Figur 3a weist der Anweisungsbereich 25 einen Hintergrund auf, der die Lesbarkeit der Anweisung und damit insbesondere die automatisierte Lesbarkeit der Anweisung 24 erschwert.

In Figur 4a weist der Hintergrund des Anweisungsbereich 25 ein graphisches Element auf, das einer bestimmten weiteren Information 22a, in Figur 4a der Darstellung eines Hasen, entspricht.

In den Figuren 3a und 3b ist die zeitlich veränderbare Information 21 durch ein Quadrat realisiert, das beispielsweise in gelber Farbe auf dem Monitor 8 dargestellt wird. Die Anweisung 24 besagt hier "Gelbes Quadrat über orange Elipse". Bei der in den Figuren 3a und 3b dargestellten Anweisung 24 ist absichtlich ein Rechtschreibfehler integriert, der ein automatisches Erkennen der Anweisung 24 nochmals erschwert. Die in Figur 3a dargestellte Anweisung 24 bedeutet, dass eine vorgegebene Aktion, beispielsweise ein Mausklick oder das Betätigen einer Eingabetaste, dann durchgeführt werden soll, wenn sich das gelbe Quadrat über der Ellipse, wie in Figur 3b dargestellt, befindet.

Erfolgt in diesem Zustand eine Betätigung eines entsprechenden Eingabemittels, so wird die Übermittlung einer Aktivierungsinformation von dem Client 2, 14 an den Server 3 veranlasst. Die Aktivierungsinformation enthält dann einen aktuellen Zustand des Informationsobjekts, der beispielsweise eine absolute Position der zeitlich veränderbaren Information 21, also des gelben Quadrats, innerhalb des Darstellungsbereichs 23 beschreibt. Die Aktivierungsinformation kann ebenso eine relative Position der zeitlich veränderbaren Information 21 zu einer weiteren Information 22a beschreiben. In dem in den Figuren 3a und 3b dargestellten Ausführungsbeispiel würde dies bedeuten, dass die Position des gelben Quadrats relativ zu der Position der ellipsenförmig ausgebildeten weiteren Information 22a beschrieben wäre.

Besonders vorteilhaft kann vorgesehen sein, dass die Aktivierungsinformation eine relative Position der zeitlich veränderbaren Information 21 zu einer Vielzahl der übrigen weiteren Informationen 22, 22a oder zu allen übrigen weiteren Information 22 beschreibt, was eine missbräuchliche Übermittlung einer künstlich erzeugten Aktivierungsinformation nochmals erschweren kann. Dies gilt insbesondere dann, wenn mehrere sich zeitlich veränderbare weitere Informationen 22, 22a in dem Darstellungsbereich 23 dargestellt sind.

Ist die Animation des Informationsobjekts deterministisch, so kann beispielsweise auch eine seit Beginn der Animation verstrichene Zeitspanne in der Aktivierungsinformation übermittelt werden. Der Server 3 kann anhand der Aktivierungsinformation dann feststellen, ob die durch die Anweisung 24 vorgegebene Bedingung bei Veranlassen der Absendung der Aktivierungsinformation erreicht war.

Es ist ferner vorstellbar, dass unterschiedlichen Teilsequenzen der Animation eine bestimmte Identifikation zugeordnet ist und mittels der Aktivierungsinformation die aktuelle Identifikation an den Server 3 übermittelt wird. Der Server 3 kann dann feststellen, ob die Animation in der vorgesehenen Teilsequenz war, als die Aktivierungsinformation an den Server 3 übermittelt worden ist.

In Figur 4b ist gezeigt, dass der Aktivierungszustand dann erreicht ist, wenn sich die beispielsweise als rote Kugel ausgebildete zeitlich veränderbare Information 21 über dem als Hasen dargestellten Hintergrundtier, also der in Figur 4b mit dem Bezugszeichen 22a bezeichneten weiteren Information befindet. Bei der in den Figuren 4a und 4b dargestellten Ausführungsform ist also eine entscheidende Information der Anweisung 24 in dem Anweisungsbereich 25 nicht als Text, sondern als Hintergrundbild dargestellt.

Dies erschwert deutlich den automatisierten Zugriff auf die zu schützenden Inhalte.

In den Figuren 3a, 3b, 5a, 5b, 6a und 6b ist die Anweisung 24 als Text vor einem die Lesbarkeit erschwerenden Hintergrund dargestellt. Ferner ist in den Figuren 3a, 3b, 5a und 5b der Text mit Fehlern behaftet beziehungsweise es sind einzelne Zeichen ausgelassen, so dass eine automatisierte Erkennung des Inhalts weiterhin erschwert ist.

In den Figuren 6a und 6b schließlich ist die zeitlich veränderbare Information 21 als ein die Mimik veränderbares stilisiertes Gesicht, ein sogenannter Smiley, dargestellt. Eine Freigabe des angeforderten elektronischen Inhalts erfolgt nur dann, wenn die Übermittlung Aktivierungsinformation veranlasst wird, während das stilisierte Gesicht einen bösartigen Gesichtsausdruck annimmt. Hierbei kann jedem möglichen Gesichtsausdruck eine Identifikation zugeordnet sein, die zusammen mit der Aktivierungsinformation an den Server 3 übermittelt wird. Nur wenn die übermittelte Identifikation diejenige ist, die dem bösartigen Gesichtsausdruck zugeordnet ist, erfolgt eine Freigabe des elektronisch gespeicherten Inhalts.

Selbstverständlich sind eine Vielzahl von weiteren Ausführungsformen und insbesondere Kombinationen der bereits beschriebenen Merkmale denkbar. Beispielsweise können mehrere zeitlich veränderbare Informationen 21 vorgesehen sein, es können mehrere, das Verstehen der Anweisung erschwerende, Merkmale zusammengeführt werden, beispielsweise ein die Lesbarkeit erschwerender Hintergrund, eine Verfremdung der Zeichen, eine teilweise akustische Wiedergabe der Anweisung oder eine Darstellung einzelner Anweisungsschritte mittels graphischer Elemente.

Ferner können der Anweisungsbereich 25 und der Darstellungsbereich 23 in unterschiedlicher Weise zueinander angeordnet sein. Wird die Anweisung 24 akustisch wiedergegeben, so kann auf die visuelle Darstellung der Anweisung 24 und des Anweisungsbereichs 25 verzichtet werden.

Insbesondere können einer zeitlich veränderbaren Information 21 eine Mehrzahl von Aktivierungszuständen zugeordnet sein. Beispielsweise könnten in den Figuren 4a und 4b mehrere hasenförmige weitere Informationen 22a abgebildet sein. Eine Freigabe des gespeicherten Inhaltes würde dann erfolgen, wenn die als rote Kugel ausgebildete zeitlich veränderbare Information 21 sich über irgendeiner der weiteren Information 22a befindet und zu diesem Zeitpunkt die Übermittlung der Aktivierungsinformation an den Server 3 veranlasst worden wäre. Ebenso könnte der in den Figuren 6a und 6b dargestellte Smiley eine Mehrzahl von unterschiedlichen bösartigen Mimiken annehmen.

Das erfindungsgemäße Verfahren kann mittels eines Computerprogramms realisiert werden, das zumindest teilweise auf dem Server 3 ausgeführt wird und zu einem anderen Teil auf dem Client 2, 14. Hierbei kann das auf dem Client 2, 14 ablaufende Computerprogramm bereits dort abgespeichert sein. Es ist ebenso vorstellbar, dass der auf dem Client 2, 14 ablaufende Teil bei einer Anfrage nach einem zu schützenden Inhalt von dem Server 3 an den Client 2, 14 übermittelt und dort ausgeführt wird. Zur Übermittlung und/oder Ausführung von derartigen Programmen, die beispielsweise als Skripte realisiert sein können, sind eine Vielzahl von Möglichkeiten vom Markt her bekannt.

Besonders erschwert wird der automatisierte Zugriff insbesondere dadurch, dass bei dem auf dem Client 2, 14 ablaufenden Programmteil prinzipiell kein maschinenlesbares Wissen über den Aktivierungszustand vorhanden zu sein braucht. Ob ein aktueller Zustand einem Aktivierungszustand entspricht, wird erst von dem Server 3 überprüft. Der Client 2, 14 übersendet lediglich Eigenschaften des während der Übersendung aktuellen Zustands des Informationsobjekts. Ob dieser aktuelle Zustand dem Aktivierungszustand entspricht, ist dem Client 2, 14 nicht bekannt. Damit kann auch ein Auslesen des Programmcodes des auf den Client 2, 14 ablaufenden Programms keine Aussage darüber liefern, wann der Aktivierungszustand erreicht ist.

## Patentansprüche

1. Verfahren zum Schutz eines elektronisch gespeicherten Inhalts vor automatisiertem Zugriff, bei dem der Inhalt von einem Client (2, 14) angefordert wird und der Clients (2, 14) zur Darstellung eines Informationsobjekts (20) veranlasst wird, **dadurch gekennzeichnet, dass**
a) das Informationsobjekt (20) mindestens eine zeitlich veränderbare Information (21) umfasst, wobei die zeitlich veränderbare Information (21) visuell unterscheidbare Zustände annimmt;
b) der Client (2, 14) zur Ausgabe mindestens einer Anweisung (24) veranlasst wird, wobei die Anweisung (24) mindestens einen Aktivierungszustand beschreibt und der Aktivierungszustand mindestens einem der visuell unterscheidbaren Zustände der veränderbaren Information (20) entspricht;
c) mittels des Clients (2, 14) die Übermittlung einer Aktivierungsinformation an einen Server (3) veranlasst wird, wobei die Aktivierungsinformation eine Beschreibung des aktuellen Zustands der zeitlich veränderbaren Information (20) umfasst;
d) der Server (3)die Aktivierungsinformation empfängt; und
e) der Server (3) den Zugriff auf den elektronisch gespeicherten Inhalt ermöglicht, falls eine Auswertung des aktuellen Zustands ergibt, dass die Übermittlung der Aktivierungsinformation während des Aktivierungszustands veranlasst worden ist.

2. Verfahren nach Anspruch 1, **dadurch gekennzeichnet, dass** mindestens eine zeitlich veränderbare Information (21) realisiert wird durch
- ein sich innerhalb eines Darstellungsbereichs (23) bewegendes Element;
- ein unterschiedliche Farben annehmendes Element;
- ein seine Größe veränderndes Element; oder
- eine unterschiedliche Werte annehmende Ziffer.

3. Verfahren nach einem der vorangehenden Ansprüche, **dadurch gekennzeichnet, dass** die Anweisung (24)
- textuell verfremdet dargestellt wird;
- ein graphisch darstellbares Element umfasst, wobei das graphisch darstellbare Element eine mittels des Informationsobjekts (20) darstellbare Information beschreibt; oder
- durch vor einer Hintergrundgraphik angeordneten Text realisiert wird;

4. Verfahren nach einem der vorangehenden Ansprüche, **dadurch gekennzeichnet, dass** der Client (2, 14) eine akustische Ausgabe zumindest eines Teils der Anweisung (24) veranlasst.

5. Verfahren nach einem der vorangehenden Ansprüche, **dadurch gekennzeichnet, dass** das Informationsobjekt (20) mindestens eine weitere Information (22, 22a) umfasst und der Aktivierungszustand eine zeitlich veränderbare Beziehung zwischen der zeitlich veränderbaren Information (21) und der weiteren Information (22a) beschreibt.

6. Verfahren nach einem der vorangehenden Ansprüche, **dadurch gekennzeichnet, dass** der aktuelle Zustand mittels der Aktivierungsinformation durch eine absolute oder relative Zeitangabe beschrieben wird.

7. Verfahren nach einem der vorangehenden Ansprüche, **dadurch gekennzeichnet, dass** die Übermittlung der Aktivierungsinformation von dem veranlasst wird in Abhängigkeit durch mindestens eine der folgenden Aktionen
- einmalige Betätigung einer Eingabevorrichtung (9);
- das Bewegen eines dargestellten Zeigers in ein bestimmtes Zielgebiet;
- Sprechen eines vorgegebenen Wortes.

8. Verfahren nach einem der vorangehenden Ansprüche, **dadurch gekennzeichnet, dass**, falls eine nicht der Aktivierungsinformation entsprechende Information von dem Server (3) empfangen wird, der Client (2, 14) zur Darstellung eines bezüglich mindestens einer Eigenschaft veränderten Informationsobjekts (20) veranlasst wird.

9. Verfahren nach einem der vorangehenden Ansprüche, **dadurch gekennzeichnet, dass** nach einer vorgegebenen Anzahl von Zugriffsversuchen ein Zugriff des Clients (2, 14) auf den Inhalt zumindest bis zu dem Eintritt eines vorgebbaren Ereignisses nicht mehr ermöglicht wird.

10. Client-Server-System (1) zum Schutz eines durch einen Client (2, 14) anforderbaren elektronisch gespeicherten Inhalts vor automatisiertem Zugriff, wobei der Client (2, 14) Mittel zur Anforderung des Inhalts aufweist, das Client-Server System (1) einen Server (3) umfasst und der Server (3) Mittel aufweist, um den Client (2, 14) zur Darstellung mindestens eines Informationsobjekts (20) zu veranlassen, **dadurch gekennzeichnet, dass**
- das Informationsobjekt (20) mindestes eine zeitlich veränderbare Information (21) umfasst und die zeitlich veränderbare Information (21) visuell unterscheidbare Zustände anzunehmen geeignet ist;
- der Server (3) Mittel aufweist, um den Client (2, 14) zur Ausgabe mindestens einer Anweisung (24) zu veranlassen, wobei die Anweisung (24) mindestens einen Aktivierungszustand beschreibt;
- der Aktivierungszustand mindestens einem der visuell unterscheidbaren Zustände der veränderbaren Information (21) entspricht;
- der Client (2, 14) Mittel zur Veranlassung einer Übermittlung einer Aktivierungsinformation an den Server (3) aufweist, wobei die Aktivierungsinformation eine Beschreibung des aktuellen Zustands der zeitlich veränderbaren Information (21) umfasst;
- der Server (3) Mittel zum Empfang der Aktivierungsinformation umfasst;
- der Server (3) Auswertemittel aufweist, um den mittels der Aktivierungsinformation empfangenen aktuellen Zustand auszuwerten und Mittel zur Freigabe des Zugriffs auf den elektronisch gespeicherten Inhalt umfasst, falls die Auswertung ergibt, dass die Übermittlung der Aktivierungsinformation während des Aktivierungszustands veranlasst worden ist.

11. Client-Server System (1) nach Anspruch 10, **dadurch gekennzeichnet, dass** das Client-Server System (1) Mittel zur Durchführung eines Verfahrens nach einem der Ansprüche 2 bis 9 aufweist.

12. Computerprogramm, das auf einem Client-Server System (1) ablauffähig ist, **dadurch gekennzeichnet, dass** das Computerprogramm zur Durchführung eines Verfahrens nach einem der Ansprüche 1 bis 9 programmiert ist, wenn das Computerprogramm auf dem Client-Server System (1) ausgeführt wird.

13. Computerprogramm nach Anspruch 12, **dadurch gekennzeichnet, dass** das Computerprogramm auf einem optischen oder magnetischen Speicherelement abgespeichert ist.
